# EUROPÄISCHE PATENTSCHRIFT

(11) **EP 1 792 125 B1**
(45) Veröffentlichungstag und Bekanntmachung des Hinweises auf die Patenterteilung: **16.03.2011**
(21) Anmeldenummer: 05789514.6
(22) Anmeldetag: 21.09.2005
(51) Int. Cl.: F24D 3/08

(54) **BRAUCHWASSERBEREITER**
INDUSTRIAL WATER TREATMENT DEVICE
DISPOSITIF DE PREPARATION D'EAU INDUSTRIELLE

(30) Priorität: 22.09.2004 AT 15912004
(43) Veröffentlichungstag der Anmeldung: 06.06.2007
(73) Patentinhaber: KIOTO Clear Energy AG, 9300 St. Veit an der Glan (AT)
(72) Erfinder: STRICKER, Erwin, 2443 Loretto (AT)
(74) Vertreter: Becker, Thomas
(86) Internationale Anmeldenummer: PCT/EP2005/054730
(87) Internationale Veröffentlichungsnummer: WO 2006/032680

(56) Entgegenhaltungen:
- DE-A1- 10 032 714
- DE-A1- 19 702 897

## Beschreibung

Die Erfindung bezieht sich auf einen Brauchwasserbereiter gemäß dem Oberbegriff des Anspruchs 1.

Solch ein Brauchwasserbereiter ist z.B. aus der DE 10032714 A bekannt. Bei derartigen Brauchwasserbereitern ist der Primärkreis des Wärmetauschers an den Heizwasservorlauf und den Heizwasserrücklauf angeschlossen. Dabei ist der Heizwasserrücklauf zusätzlich an das Mischventil angeschlossen. Dies dient dazu, um eine Überhitzung des Brauchwassers zu vermeiden: im Falle eines zu starken Anstiegs der Brauchwasser-Temperatur wird dem Heizwasservorlauf Heizwasserrücklauf-Wasser beigemischt, um die Temperatur des Primärkreises des Wärmetauschers zu vermindern, wobei die Brauchwasser-Temperatur meist thermostatisch gesteuert wird.

Üblicherweise ist ein solcher Wärmetauscher an einen Schichtenspeicher zur Pufferung angeschlossen. Dabei ist es wesentlich, dass die Schichtung in diesem Speicher bei der Bereitung des Brauchwassers möglichst wenig gestört wird. Auch dafür ist das Mischventil günstig, denn dadurch wird zusätzlich erreicht, dass das Wasser im Heizwasser-Rücklauf relativ kühl ist, sodass die Schichtung im Boiler nicht zerstört wird.

Dennoch ergibt sich bei den bekannten Brauchwasserbereitern das Problem, dass bei kleinen Zapfmengen an Brauchwasser aufgrund einer konstant gehaltenen Pumpenleistung im Heizwasserkreislauf das dem Primärkreis des Wärmetauschers zugeführte Heizwasser nicht tief genug abgekühlt werden kann und dadurch die Schichtung im Pufferspeicher zerstört wird: bei minimalen Zapfmengen wird die Temperatur des Heizwasser-Rücklaufs nur minimal unter der gewünschten Brauchwasser-Temperatur liegen, denn wenn nur wenig Wasser gezapft wird, wird das Heizwasser auch nur gering abgekühlt. Eine niedrige Temperatur des Rücklaufs zu einem Pufferspeicher ist bei dieser Bauart also nur bei Volllast gewährleistet, in allen Teillastfällen steigt die Temperatur des Rücklaufs zum Pufferspeicher bis max. zur Warmwasseraustrittstemperatur an, wodurch die Schichtung im Pufferspeicher gestört wird und der Gesamtwirkungsgrad der Anlage sinkt. Damit ist keine optimale Brennwert- oder Solarenergienutzung möglich.

Ein weiterer Nachteil ist die Trägheit des Systems "Wärmetauscher, Pumpe, verbindende Rohrleitungen und Heizwasserinhalt sowie des Reglers selbst mit Temperaturfühler und Regelstrecke". Diese Trägheit führt zu sehr ungenauer und permanent schwankender Temperatur des Brauchwassers.

Ferner ist es bekannt, eine von der Brauchwasser-Temperatur (oder auch der Temperatur des Heizwasser-Rücklaufs) gesteuerte Regelung der Durchsatzmenge vorzusehen. Diese erfolgt entweder über ein 3-Wege Verteilventil, ein 2-Wege Durchgangsventil oder die Regelung der Heizwasserpumpe. (Siehe z.B. die DE 19642179 C oder die DE 2202095 A).

Bei diesen Brauchwasserbereitern wird der Wärmetauscher nicht vor dem Eintritt von Heizwasser mit hoher Temperatur geschützt, wodurch die Gefahr von Verkalkungen besteht.

Eine Regelung der Heizwasserpumpe, z.B. mittels Drehzahlregelung, ist bei hohen Kosten sehr ungenau, da zur Erlangung des gleichen Ziels eine wesentlich höhere Reduzierung der Heizwasserdurchflussmengen erforderlich ist als bei der Temperaturreduzierung mit einer Rücklaufbeimischung. Die meisten Systeme funktionieren trotz aufwändigster Regelung nur mit einer mechanischen Temperaturvormischung zufrieden stellend.

Darüber hinaus zählt eine dem Brauchwasserdurchsatz proportionale Regelung des Durchsatzes des Heizwassers zum Stand der Technik. Diese berücksichtigt jedoch nicht, dass das Heizwasser, z.B. bei der Nutzung von Solarenergie, mit unterschiedlichen Temperaturen anliegen kann. Es kann deshalb bei überhöhten Vorlauftemperaturen zu einer schnellen Verkalkung und zu starken Schwankungen der Brauchwasser-Temperatur kommen, die durch Zusatzmaßnahmen sekundärseitig, wie z.B. durch einen Verbrühschutz oder einen Brauchwassermischer, reduziert werden müssen.

### Offenbarung der Erfindung

### Technisches Problem

Ziel der Erfindung ist es, diese Nachteile zu vermeiden und einen Brauchwasserbereiter der eingangs erwähnten Art vorzuschlagen, der sich durch gute Regelung der Brauchwassertemperatur bei unterschiedlichen Zapfmengen auszeichnet und eine niedrige Temperatur des Heizwasser-Rücklaufs sicherstellt.

### Technische Lösung

Erfindungsgemäß wird dies bei einem Brauchwasserbereiter der eingangs erwähnten Art durch die kennzeichnenden Merkmale des Anspruchs 1 erreicht.

Durch die vorgeschlagenen Maßnahmen ergibt sich praktisch ein mehrstufiger Wärmetauscher, wobei für die Regelung nur ein Teil des Wärmetauschers herangezogen wird. Die Regelung hat daher wesentlich weniger Trägheit und es wird erreicht, dass auch bei einem Betrieb mit stark schwankenden Heizwasser-Vorlauftemperaturen (wie sie z.B. bei einem Betrieb in Kombination mit Solaranlagen auftreten), wo sich eine gewisse Verkalkungsproblematik ergibt, die Zulauftemperatur zum Primärkreis entsprechend abgesenkt werden kann, sodass sekundärseitig keine Verkalkung entsteht. Weiters ist es auch möglich, bei sehr unterschiedlichen Zapfmengen allein durch entsprechende Regelung des Mischventils im Primärkreis des Wärmetauschers die Temperatur des ablaufenden Brauchwassers in relativ engen Grenzen zu halten. Dadurch wird auf einfache Weise die Gefahr eines Verbrühens weitgehend vermieden.

Durch die Mehrstufigkeit wird auch eine niedrigere Rücklauftemperatur erzielt:
zwischen dem Anschluss für das Wasser, das dem Heizwasservorlauf beigemischt wird, und dem Anschluss für den Heizwasser-Rücklauf liegt ja noch ein Teil des Wärmetauschers, sodass die Heizwasser-Rücklauftemperatur kühler ist als das Wasser, das dem Heizwasser-Vorlauf beigemischt wird. Im Betrieb fließt über den Heizwasserrücklauf nur jene Wassermenge ab, die über den Heizwasservorlauf zufließt. Da nun bei einer geringen Zapfmenge nur wenig Heizwasser in den Primärkreis einströmt, fließt nur wenig Heizwasser über den Rücklauf ab und wird entsprechend weit abgekühlt. Dies ermöglicht es, die Schichtung in einem mit dem Wärmetauscher zusammenarbeitenden Puffer-Schichtenspeicher in einem hohen Maße zu erhalten. Dadurch ergibt sich ein hoher Wirkungsgrad der gesamten Anlage.

Die vorgeschlagenen Maßnahmen ermöglichen es auch, dass unabhängig von der Höhe der Heizwasser-Vorlauftemperatur und unabhängig von der Zapfmenge und Zapfdauer ein von Legionellen freies Brauchwasser mit einer einstellbaren Temperatur bereitgestellt wird. Dabei können Schwankungen bei der Zapftemperatur des Brauchwassers bei maximalem Verkalkungsschutz in jedem Betriebszustand vermieden werden und gleichzeitig eine sehr niedrige Heizwasser-Rücklauftemperatur sichergestellt werden.

Durch den mindestens einen Zwischenanschluss im Primärkreis des Wärmetauschers kann dem in den Primärkreis einströmenden Heizwasser Wasser aus dem Zwischenanschluss mit entsprechend geringer Temperatur beigemischt werden, wobei die Pumpe mit ihrer Nenndrehzahl betrieben werden kann, sodass es zu einem maximal möglichen Selbstreinigungseffekt des Wärmetauschers mit höchstmöglichen Turbulenzen und damit mit einem sehr guten Wärmeübergang kommt. Auch dies trägt zum raschen Ansprechen der Temperaturregelung des Brauchwassers und damit zur Minimierung der Regelschwankungen bei.

Dabei ist auch ein sehr hoher Verkalkungsschutz gegeben, da dem Wärmetauscher ein Mischwasser zugeführt werden kann, das aus dem Heizwasservorlauf und dem aus dem aus dem Zwischenanschluss des Primärkreises abgezogenen abgekühlten Wasser besteht. Dabei gelangt in der Regel nur Wasser mit einer Temperatur in den Primärkreis des Wärmetauschers, das max. 8°C über der Brauchwasser-Austrittstemperatur liegt, abhängig von der Zapfmenge, wobei sich diese Temperaturdifferenz im Teillastbetrieb verringert.

Aufgrund der erfindungsgemäß vorgesehenen Maßnahmen ist somit sichergestellt, dass trotz eines nur geringen Aufwands eine sehr hohe Regelgüte der Brauchwasser-Temperatur unabhängig von der jeweiligen Zapfmenge und der anliegenden Heizwasser-Vorlauftemperatur bei relativ kaltem Heizwasser-Rücklauf erreicht werden kann.

Durch die Merkmale des Anspruchs 2 ergibt sich der Vorteil eines sehr einfachen Aufbaus, bei dem sichergestellt ist, dass die durch das Mischventil vorgegebene Wassermenge aus dem Zwischenanschluss dem Heizwasservorlauf beigemischt wird.

Durch die Merkmale des Anspruchs 3 ist sichergestellt, dass die Pumpe nur dann in Betrieb geht, wenn Brauchwasser gezapft wird.

Alternativ dazu können aber auch die Merkmale des Anspruchs 4 verwirklicht werden. Hier erfolgt die Beaufschlagung des Primärkreises des Wärmetauschers in Abhängigkeit von der Brauchwasser-Temperatur. Dadurch kann im Falle einer Abkühlung der Brauchwasserleitung aufgrund von Wärmeverlusten an die Umgebung während Zapfpausen der Primärkreis teilweise im Kurzschluss über die Pumpe und das Mischventil betrieben werden, wodurch dieser Teil des Primärkreises auf einer entsprechend hohen Temperatur gehalten werden kann, sodass auf diese Weise im Falle einer Zapfung von Brauchwasser rasch die vorgesehene Brauchwasser-Temperatur erreicht wird.

Um die Temperatur des Brauchwassers sehr gut regeln zu können, ist es vorteilhaft, die Merkmale des Anspruchs 5 vorzusehen.

Wenn besonderer Wert auf die Einhaltung einer bestimmten Temperatur des Heizwasserrücklaufes gelegt wird, ist es alternativ dazu aber auch möglich, die Merkmale des Anspruchs 6 vorzusehen. Die Temperatur des Brauchwassers wird in diesem Fall indirekt geregelt.

Um auch in größeren Entfernungen vom Brauchwasserbereiter rasch warmes Wasser zur Verfügung zu haben, sind Zirkulationsleitungen üblich. Dies ist auch bei einem Brauchwasserbereiter gemäß der vorliegenden Erfindung möglich, wenn die Merkmale des Anspruchs 7 verwirklicht sind. Es wird hier also auch die Sekundärseite des Wärmetauschers unterteilt und die Zirkulationsleitung an den mittleren Anschluss angeschlossen.

Während Zapfpausen ergibt sich allerdings das Problem, dass kein kaltes Brauchwasser zufließt und somit der Heizwasser-Rücklauf nicht ausreichend abgekühlt wird. (Seine Temperatur muss zumindest so hoch sein wie die Temperatur des durch die Zirkulationsleitung zurückfließenden Wassers.) Es ist daher zweckmäßig, die Merkmale des Anspruchs 8 vorzusehen. Dadurch ergibt sich die Möglichkeit, dass der Heizwasser-Rücklauf während der Zapfpausen (wo er wärmer ist) an einer höheren Stelle in den Puffer-Schichtenspeicher zurückgeführt werden kann, sodass die Schichtung nicht zerstört wird.

### Kurze Beschreibung von Zeichnungen

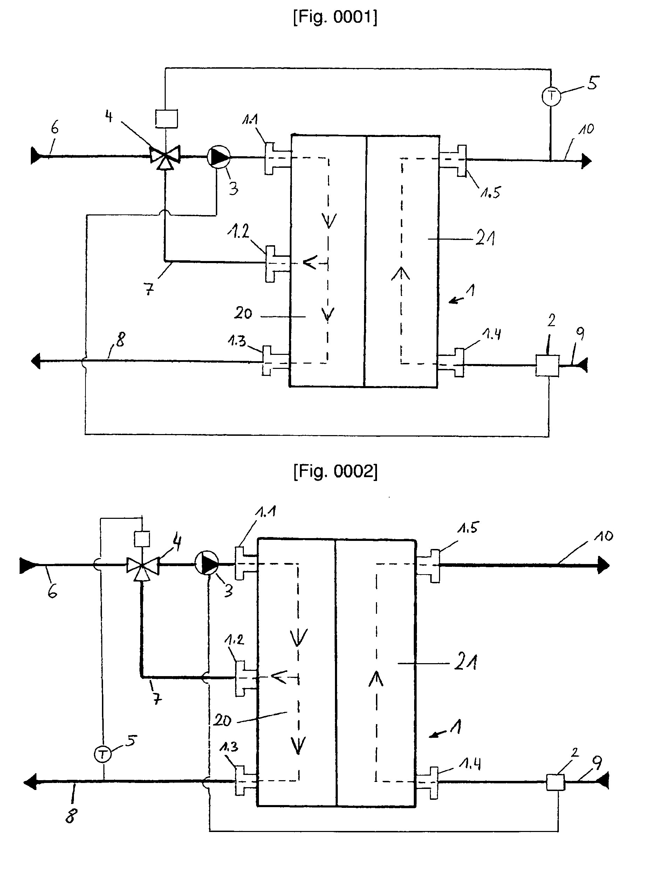

Die Erfindung wird nun anhand der Zeichnung näher erläutert. Die Fig. 1 bis 4 zeigen verschiedene Ausführungsformen eines erfindungsgemäßen Brauchwasserbereiters.

Bei allen Ausführungsformen des erfindungsgemäßen Brauchwasserbereiters ist ein Wärmetauscher 1 vorgesehen, dessen Primärkreis mit 20 und dessen Sekundärkreis mit 21 bezeichnet ist. Dabei sind an dem Sekundärkreis 21 eine Brauchwasser-Zulaufleitung 9 und eine Brauchwasser-Ablaufleitung 10 über Anschlüsse 1.4 bzw. 1.5 angeschlossen. An den Primärkreis 20 sind über Anschlüsse 1.1 und 1.3, die in strömungstechnischer Hinsicht an dem Einlass bzw. an dem Auslass des Primärkreises 20 angeordnet sind, eine Heizwasser-Vorlaufleitung 6 bzw. eine Heizwasser-Rücklaufleitung 8 angeschlossen.

An dem Primärkreis 20 ist weiters über einen Zwischenanschluss 1.2 eine Anschlussleitung 7 angeschlossen.

In der Heizwasser-Vorlaufleitung 6 ist ein Mischventil 4 und zwischen diesem und dem Anschluss 1. des Primärkreises 20 eine Pumpe 3 eingebaut. Dabei ist ein Anschluss des Mischventils 4 mit der an dem Anschluss 1.2 des Primärkreises 20 angeschlossenen Anschlussleitung 7 verbunden. Dadurch kann Wasser aus dem Zwischenanschluss 1.2 des Primärkreises 20 dem Heizwasser-Vorlauf zugemischt und dadurch die Temperatur des in den Primärkreis 20 eintretenden Wassers vermindert werden. Die Zumischung von aus dem Zwischenanschluss 1.2 abgezogenem Wasser erfolgt durch mehr oder weniger weites Öffnen der Verbindung zwischen der Anschlussleitung 7 und dem Anschluss 1.1 des Primärkreises 20.

Bei der Ausführungsform nach der Fig. 1 ist ein Temperaturfühler 5 in der Brauchwasser-Ablaufleitung 10 angeordnet, der über eine Steuerleitung mit dem Mischventil 4 verbunden ist und dieses steuert. Weiters ist in der Brauchwasser-Zulaufleitung 9 ein Durchflussschalter 2 vorgesehen, der die Pumpe 3 steuert. Dabei kann diese mit konstanter Drehzahl betrieben werden und wird bei Beginn einer Zapfung von Brauchwasser gestartet.

Je nach der Temperatur des bereitgestellten Heizwassers und der Zapfmenge des Brauchwassers, dessen Temperatur über den Temperaturfühler 5 gesteuert ist, wird mehr oder weniger über den Zwischenanschluss 1.2 aus dem Primärkreis 20 abgezogenes und verglichen mit dem Heizwasser-Vorlauf kühleres Wasser diesem über das Mischventil 4 zugemischt.

Dadurch ist sichergestellt, dass das über den Heizwasserrücklauf 8 abfließende Heizwasser entsprechend stark abgekühlt ist und daher einem nicht dargestellten Puffer-Schichtenspeicher zugeführt werden kann, ohne dessen Schichtung zu stören.

Bei der Ausführungsform nach der Fig. 2 ist das Mischventil 4 von einem in der Heizwasser-Rücklaufleitung 8 angeordneten Temperaturfühler 5 gesteuert. Dabei erfolgt die Steuerung der Temperatur des Brauchwassers indirekt über die Temperatur des Heizwasserrücklaufs. Dadurch wird gewährleistet, dass die Temperatur des Heizwasser-Rücklaufs weitgehend konstant bleibt. Allerdings kann dabei die Temperatur des Brauchwassers nicht in so engen Grenzen gehalten werden wie bei der Ausführungsform nach der Fig. 1.

Die Steuerung der Pumpe 3 erfolgt dabei wieder durch den in der Brauchwasser-Zulaufleitung 9 angeordneten Durchflussschalter 2, wobei die Steuerung der Pumpe 3 im Wesentlichen durch eine EIN-AUS-Steuerung gebildet ist.

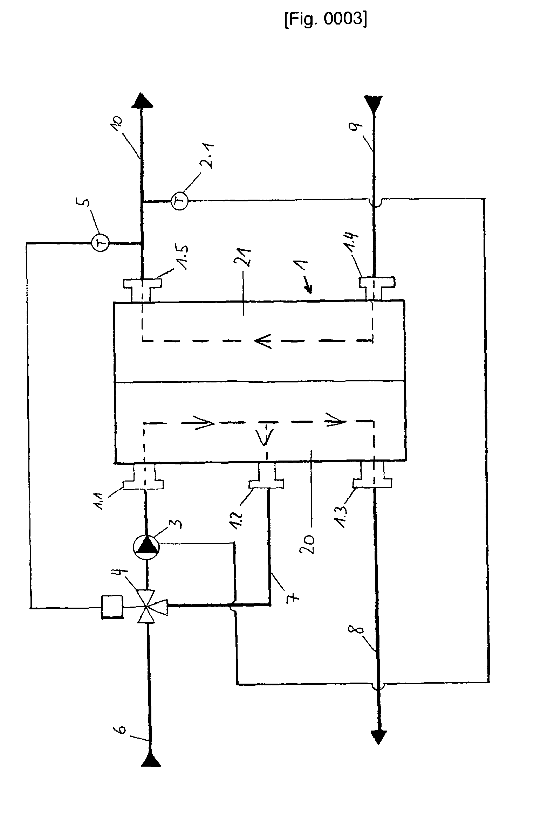

Bei der Ausführungsform nach der Fig. 3 ist in der Brauchwasser-Ablaufleitung 10 neben dem Temperaturfühler 5 ein Temperaturschalter 2.1 vorgesehen, der die Pumpe 3 steuert.

Wenn es bei längeren Pausen bei der Zapfung von Brauchwasser aufgrund der Ableitung von Wärme über die Rohrleitungen zu einem zu tiefen Absinken der Temperatur in der Brauchwasser-Ablaufleitung 10 kommt, wird die Pumpe 3 gestartet. Dadurch kommt es zu einer Zirkulation im Primärkreis 20 des Wärmetauschers 1 über den Zwischenanschluss 1.2, die Anschlussleitung 7, das Mischventil 4 und die Pumpe 3 zum Anschluss 1.1. Dadurch ist sichergestellt, dass bei Beginn einer neuerlichen Zapfung das Brauchwasser rasch die gewünschte Temperatur erreicht und somit ein hoher Benutzerkomfort gewährleistet ist.

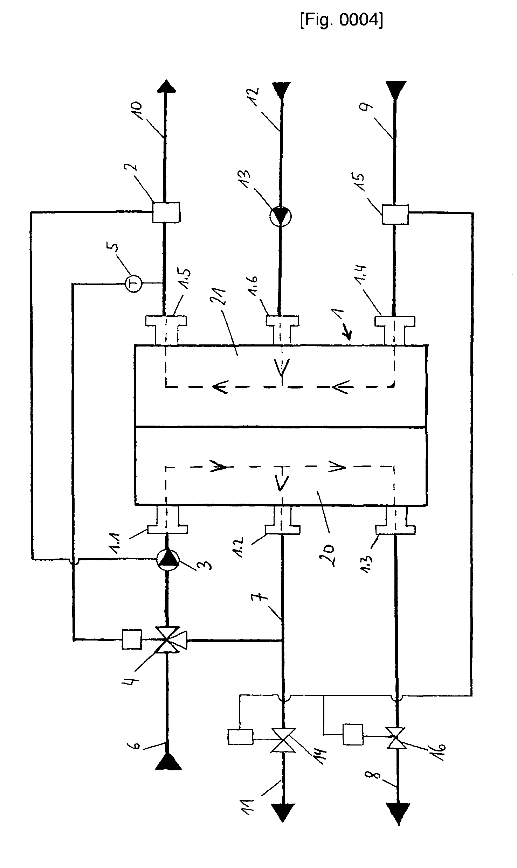

Die Ausführungsform nach der Fig. 4 bezieht sich auf eine Installation mit Zirkulationsleitung.

An den Sekundärkreis 21 ist über einen Zwischenanschluss 1.6 eine Zirkulationsleitung 12 angeschlossen, in der eine Zirkulationspumpe 13 angeordnet ist, die z.B. zeitgesteuert sein kann. Die in der Heizwasser-Vorlaufleitung 6 angeordnete Pumpe 3 ist von einem in der Brauchwasser-Ablaufleitung 10 angeordneten Durchflussschalter 2 gesteuert. Die Pumpe 3 läuft also immer dann, wenn gezapft wird oder die Zirkulationsleitung in Betrieb ist. Das Mischventil 4 ist von einem ebenfalls in der Brauchwasser-Ablaufleitung 10 angeordneten Temperaturfühler 5 gesteuert.

Eine Anschlussleitung 7, die an den Zwischenanschluss 1.2 des Primärkreises 20 angeschlossen ist, ist mit einem Ventil 14 versehen, an das eine Verbindungsleitung 11 angeschlossen ist, die zu einem nicht dargestellten Puffer-Schichtenspeicher führt und in diesen in einem Bereich mündet, der einem mittleren Temperaturbereich entspricht.

Weiters ist auch in der Heizwasser-Rücklaufleitung 8 ein Ventil 16 angeordnet, wobei die beiden Ventile 14 und 16 wechselweise offen bzw. geschlossen sind. Gesteuert werden diese beiden Ventile 14, 16 von einem in der Brauchwasser-Zulaufleitung 9 angeordneten Durchflussschalter 15, wobei bei Beginn einer Zapfung und damit dem Beginn einer Strömung in der Leitung 9 das Ventil 14 geschlossen und das Ventil 16 geöffnet wird. Grundsätzlich ist es auch möglich, das Ventil 16 durch eine Blende zu ersetzen, die sicherstellt, dass im Zuge der Heizwasser-Rücklaufleitung 8 ein höherer Strömungswiderstand gegeben ist als über das geöffnete Ventil 14. Dabei ist es auch möglich, in den Leitungen 8 und 11 Rückschlagklappen vorzusehen, um eine definierte Strömungsrichtung sicherzustellen.

Über die Zirkulationsleitung 12 kann durch entsprechende Umwälzung des Brauchwassers dieses in der gesamten Leitung auch bei langen Zapfpausen auf einer gewünschten Temperatur gehalten werden, wodurch sich ein hoher Benutzerkomfort ergibt.

Bei einer Zapfung wird ebenfalls, je nach der Temperatur des bereitgestellten Heizwassers und der gewünschten Temperatur des Brauchwassers, die durch den Temperaturfühler 5 erfasst wird, dem Heizwasservorlauf mehr oder weniger Wasser aus dem Zwischenanschluss 1.2 über die Anschlussleitung 7 zugemischt. Die Pumpe 3 im Heizwasservorlauf 6 wird durch einen in der Brauchwasser-Ablaufleitung 10 angeordneten Durchflussschalter 2 gesteuert.

Die Temperaturfühler 5 und der Temperaturschalter 2.1 können bei allen Ausführungsformen beliebig ausgebildet sein, desgleichen auch das Mischventil 4.

Bei allen Ausführungsformen fließt von der Heizwasser-Vorlaufleitung 6 nur soviel Heizwasser über das Mischventil 4 zu, wie es für die Erreichung der vorgesehenen Temperatur des Brauchwassers erforderlich ist. Genau diese Menge fließt auch über die Heizwasser-Rücklaufleitung 8 ab, wobei das Rücklaufwasser stark abgekühlt wird. Ist die vorgesehene Temperatur des Brauchwassers erreicht, so schließt das Mischventil 4 den Heizwasserzulauf, und es wird der Bereich des Primärkreises zwischen den Anschlüssen 1.1 und 1.2 im Kurzschluss betrieben. Grundsätzlich können auch mehrere Zwischenanschlüsse im Primärkreis 20 des Wärmetauschers 1 vorgesehen sein, aus denen je nach Bedarf Wasser abgezogen und dem Heizwasservorlauf 6 zugemischt werden kann.

## Patentansprüche

1. Brauchwasserbereiter mit einem Wärmetauscher (1), dessen Primärkreis (20) mit einer Heizwasser-Vorlaufleitung (6) und einer Heizwasser-Rücklaufleitung (8) verbunden ist, wobei in der Heizwasser-Vorlaufleitung (6) ein von einem Temperaturfühler (5) gesteuertes Mischventil (4) angeordnet ist, dessen ein Anschluss mit einer Quelle von Wasser verbunden ist, dessen Temperatur unter jener des Heizwasservorlaufs (6) liegt, und wobei eine Pumpe (3) vorgesehen ist;
wobei weiters an dem Sekundärkreis (21) des Wärmetauschers (1) eine Brauchwasser-Zulaufleitung (9) und eine Brauchwasser-Ablaufleitung (10) angeschlossen sind; **dadurch gekennzeichnet, dass** der Primärkreis (20) des Wärmetauschers mit mindestens einem Zwischenanschluss (1.2) versehen ist, der die Quelle von Wasser ist, dessen Temperatur unter jener des Heizwasservorlaufs (6) liegt.

2. Brauchwasserbereiter gemäß Anspruch 1, **dadurch gekennzeichnet, dass** die Pumpe (3) in der Heizwasser-Vorlaufleitung (6) angeordnet ist.

3. Brauchwasserbereiter gemäß Anspruch 1 oder 2, **dadurch gekennzeichnet, dass** in der Brauchwasser-Zulaufleitung (9) oder in der Brauchwasser-Ablaufleitung (10) ein Durchflussschalter (2) angeordnet ist, der die Pumpe (3) steuert.

4. Brauchwasserbereiter gemäß Anspruch 1 oder 2, **dadurch gekennzeichnet, dass** die Pumpe (3) von einem im Bereich des Brauchwasser-Ablaufs angeordneten Temperaturschalter (2.1) gesteuert ist (Fig. 3).

5. Brauchwasserbereiter gemäß einem der Ansprüche 1 bis 4, **dadurch gekennzeichnet, dass** das Mischventil (4) von einem in der Brauchwasser-Ablaufleitung (10) des Sekundärkreises (21) angeordneten Temperaturfühler (5) gesteuert ist.

6. Brauchwasserbereiter gemäß einem der Ansprüche 1 bis 4, **dadurch gekennzeichnet, dass** das Mischventil (4) von einem in der Heizwasser-Rücklaufleitung (8) angeordneten Temperaturfühler (5) gesteuert ist.

7. Brauchwasserbereiter gemäß einem der Ansprüche 1 bis 6, **dadurch gekennzeichnet, dass** an dem Sekundärkreis (21) des Wärmetauschers (1) zwischen dem Brauchwasserzulauf (9) und dem Brauchwasserablauf (10) eine Zirkulationsleitung (12) angeschlossen ist, in der eine Zirkulationspumpe (13) angeordnet ist.

8. Brauchwasserbereiter gemäß Anspruch 7, **dadurch gekennzeichnet, dass** in einer an dem Zwischenanschluss (1.2) des Primärkreises (20) angeschlossenen Leitung (7) nach dem Anschluss des Mischventils (4) und in der Heizwasser-Rücklaufleitung (8) je ein Ventil (14, 16) angeordnet ist, die von einem in der Brauchwasser-Zulaufleitung (9) angeordneten Durchflussschalter (15) gesteuert werden.

## Claims

1. Tap water processing installation including a heat exchanger (1), the primary circuit (20) of which is in fluid connection with a heating water supply pipe (6) and a heating water return pipe (8), wherein a mixing valve (4), having access to a source of water with a temperature below that of the supplied heating water and controlled by a thermo couple (5), is arranged in the heating water supply pipe (6), and a pump (3), wherein a tap water supply pipe (9) and a tap water return pipe (10) are connected to a secondary circuit (21) of the heat exchanger (1), **characterized in that** the primary circuit (20) of the heat exchanger is equipped with at least one intermediate access (1.2), being the source of water with a temperature below that of the supplied heating water.

2. Tap water processing installation according to claim 1, **characterized in that** the pump (53) is arranged in the heating water supply pipe (6).

3. Tap water processing installation according to claim 1 or 2, **characterized in that** a flow rate switch (2), controlling the pump (3), is arranged in the tap water supply pipe (9) or in the tap water return pipe (10).

4. Tap water processing installation according to claim 1 or 2, **characterized in that** the pump (3) is controlled by a temperature switch (2.1) that is located in the area of the tap water exit (fig. 3).

5. Tap water processing installation according to one of claims 1 to 4, **characterized in that** a mixing valve (4) is controlled by a thermo couple (5) located in the tap water return pipe (10) of the secondary circuit (21).

6. Tap water processing installation according to one of claims 1 to 4, **characterized in that** the mixing valve (4) is controlled by a thermo couple (5) located in the heating water return pipe (8).

7. Tap water processing installation according to one of claims 1 to 6, **characterized in that** a circulation pipe (12) with a circulation pump (13) arranged in it is connected to the secondary circuit (21) of the heat exchanger (1) between the tap water supply pipe (9) and the tap water return pipe (10).

8. Tap water processing installation according to claim 7, **characterized in that** in each of a pipe (7) connected to the intermediate access (1.2) of the primary circuit (20) after the connection of the mixing valve (4) and the heating water return pipe (8) a valve (14,16) is arranged that is controlled by a flow rate switch (15) located in the tap water supply pipe (9).

## Revendications

1. Appareil de conditionnement de l'eau sanitaire, comprenant un échangeur
de chaleur (1), dont le circuit primaire (20) est relié à une conduite aller d'eau de chauffage (6) et à une conduite retour d'eau de chauffage (8), une vanne de mélange (4) commandée par une sonde de température (5) étant disposée dans la conduite aller d'eau de chauffage (6), vanne dont un branchement est relié à une source d'eau, dont la température est inférieure à celle de l'aller d'eau de chauffage (6), et une pompe (3) étant prévue, une conduite d'arrivée d'eau sanitaire (9) et une conduite d'écoulement (10) d'eau sanitaire étant raccordées également au circuit secondaire (21) de l'échangeur de chaleur (1), **caractérisé en ce que** le circuit primaire (20) de l'échangeur de chaleur est doté d'au moins un branchement intermédiaire (1.2) qui est la source d'eau dont la température est inférieure à celle de l'aller d'eau de chauffage (6).

2. Appareil de conditionnement de l'eau sanitaire selon la revendication
1, **caractérisé en ce que** la pompe (3) est disposée dans la conduite aller d'eau de chauffage (6).

3. Appareil de conditionnement de l'eau sanitaire selon la revendication
1 ou 2, **caractérisé en ce qu'**un interrupteur de débit (2), lequel commande la pompe (3), est disposé dans la conduite d'arrivée d'eau sanitaire (9) ou dans la conduite d'écoulement d'eau sanitaire (10).

4. Appareil de conditionnement de l'eau sanitaire selon la revendication
1 ou 2, **caractérisé en ce que** la pompe (3) est commandée par un interrupteur de température (2.1) disposé dans la zone de l'écoulement d'eau sanitaire (figure 3).

5. Appareil de conditionnement de l'eau sanitaire selon l'une quelconque
des revendications 1 à 4, **caractérisé en ce que** la vanne de mélange (4) est commandée par une sonde de température (5) disposée dans la conduite d'écoulement d'eau sanitaire (10) du circuit secondaire (21).

6. Appareil de conditionnement de l'eau sanitaire selon l'une quelconque
des revendications 1 à 4, **caractérisé en ce que** la vanne de mélange (4) est commandée par une sonde de température (5) disposée dans la conduite retour d'eau de chauffage (8).

7. Appareil de conditionnement de l'eau sanitaire selon l'une quelconque
des revendications 1 à 6, **caractérisé en ce qu'**une conduite de circulation (12), dans laquelle est disposée une pompe de circulation (13), est raccordée au circuit secondaire (21) de l'échangeur de chaleur (1) entre l'arrivée d'eau sanitaire (9) et l'écoulement d'eau sanitaire (10).

8. Appareil de conditionnement de l'eau sanitaire selon la revendication
7, **caractérisé en ce qu'**à chaque fois une vanne (14, 16) est disposée dans une conduite (7), raccordée au branchement intermédiaire (1.2) du circuit primaire (20), après le branchement de la vanne de mélange (4) et dans la conduite retour d'eau de chauffage (8), lesquelles vannes sont commandées par un interrupteur de débit (15) disposé dans la conduite d'arrivée d'eau sanitaire (9).
